# EUROPEAN PATENT APPLICATION

(11) **EP 1 246 281 A1**
(43) Date of publication of application: **02.10.2002**
(21) Application number: 00969872.1
(22) Date of filing: 18.10.2000
(51) Int. Cl.: H01M 8/02, H01M 8/10

(54) **POLYMER ELECTROLYTE TYPE FUEL CELL AND PRODUCTION METHOD THEREFOR**

(30) Priority: 18.10.1999 JP 29505099
(71) Applicant: MATSUSHITA ELECTRIC INDUSTRIAL CO., LTD., Kadoma-shi, Osaka 571-8501 (JP)
(72) Inventor: KOBAYASHI, Susumu, Ikoma-shi, Nara 630-0134 (JP); HOSAKA, Masato, Osaka-shi, Osaka 530-0043 (JP); KANBARA, Teruhisa, Toyonaka-shi, Osaka 560-0056 (JP)
(74) Representative: Nachshen, Neil Jacob
(86) International application number: JP0007252
(87) International publication number: WO01029921

(57) **Abstract**

The present invention relates to a polymer electrolyte fuel cell and a method of making the same.

A polymer electrolyte fuel cell comprises an MEA comprising a polymer electrolyte membrane and a pair of catalyst-containing porous electrodes sandwiching the membrane. Electrically conductive separators are arranged at outer faces of the MEA. Porous electrodes having a good gas permeability may cause a reactive gas to leak, from end portions thereof, to outside of the separators, so that generally a thermosetting resin material is impregnated into peripheral edge portions of the porous electrodes, and is heat cured to provide a resin sealing member. However, it has a problem in that due to volume shrinkage of the resin material and solvent evaporation which occur upon the formation of the resin sealing member, it is difficult to maintain sufficient sealing property.

According to the present invention, a thermoplastic resin is injection-molded or press-molded at a peripheral portion of the MEA, thereby to pressure-impregnate the resin into inside of peripheral edge portions of porous electrodes 12, and to form a gas sealing member 14 for covering a polymer electrolyte membrane 11 extending out of edge portions of the porous electrodes, in order to solve the above mentioned problem of sealing property.

## Description

### Technical Field

The present invention relates to a polymer electrolyte fuel cell, more particularly to an improvement of an electrolyte membrane-electrode assembly which is a primary part thereof.

### Background Art

A polymer electrolyte fuel cell is fundamentally based on a principle that a hydrogen ion conductive polymer electrolyte membrane is exposed to a fuel gas such as hydrogen at one face thereof and to an oxidant gas such as air at other face thereof, whereby water is produced by chemical reaction through the polymer electrolyte membrane, and the reaction energy generated thereby is electrically collected.

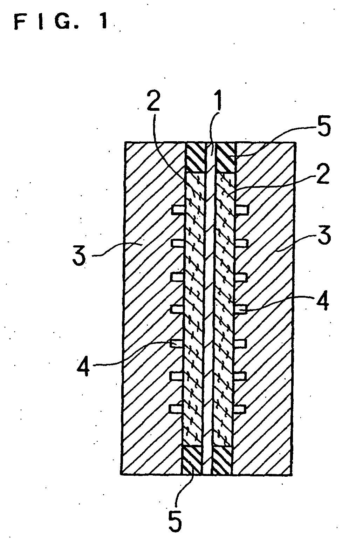

Fig. 1 shows a structure of a fuel cell of such kind.

A hydrogen ion conductive polymer electrolyte membrane 1 and a pair of catalyst-containing porous electrodes 2 sandwiching the electrolyte membrane 1 are integrally bonded by hot pressing or the like. This is called an electrolyte membrane-electrode assembly (MEA), and can be separately handled. Outside the electrode 2, a pair of electrically conductive separator plates 3 having a gas flow channel 4 for supplying a fuel gas or an oxidant gas to the respective electrodes are arranged. A gasket for preventing leak out of the gas is arranged between a peripheral edge portion of the electrolyte membrane 1, which edge portion is a part of the membrane extending out of edges of the electrodes 2, and the electrically conductive separator plates. The reactive gases introduced from the gas flow channel 4 of the separator plates 3 cause electrochemical reaction at the porous electrodes 2 through the electrolyte membrane 1, and the electric power generated therein are collected to outside through the separator plates 3.

Although the hydrogen ion conductive polymer electrolyte membrane has ionic conductivity, it does not have gas permeability or electronic conductivity, and it functions to physically and electronically isolate the fuel electrode and the oxygen electrode. Usually, the electrolyte membrane is designed to have a size larger than the electrodes, and such structure is provided that the part of the membrane extending out of the electrodes is sandwiched by the gasket and the separator plates in order to prevent electrical short circuit between the electrodes.and cross leak to cause intermingling of the oxidant gas and the fuel gas.

Since the porous electrodes have good gas permeability, the above described structure may cause the reactive gases to leak out of the end portions of the porous electrodes to the outside of the separator plates. Thus, generally, a thermosetting resin material is impregnated into the peripheral edge portions of the porous electrodes, and the resin material is heat cured to provide a resin seal portion, thereby to form a gas sealing structure.

However, the above described gas sealing structure has the following problems.

That is, upon forming the resin sealing portion, the resin material is to be dissolved in a solvent, and is to be impregnated into the porous electrodes, so that the viscosity of the solution having the resin material dissolved therein has to be low. When the solution is impregnated in the electrodes, the resin material completely fills the micro pores in the porous electrodes. However, since the solvent evaporates upon curing, voids are produced inside the sealing portion after the curing. Furthermore; usually, the resin material shrinks in its volume upon the curing reaction. Because of the volume shrinkage and the solvent evaporation, it is difficult to maintain sufficient sealing property after the crosslinking polymerization of the resin material impregnated in the electrodes.

Methods having been attempted to solve the problems are a method of pressure-impregnating a non-diluted resin material to the peripheral edge portions of the electrodes, and a method of mixing a non-shrinkable filler such as carbon and talc with the resin material. However, with these methods, it per se is difficult to fill the micro pores of the electrodes with the resin material, and thus complete sealing property is not obtainable.

Another method having been attempted is a method of covering the porous electrodes with a thermoplastic resin film thereby to bond-seal with the electrolyte membrane. (See e.g. Japanese Laid-open Patent Publication Hei 11-45729.) However, this method has a problem as well. Currently used polymer electrolyte membranes function to transport hydrogen ions under the existence of water contained therein, so that they inevitably need to have a strong intramolecular polarity. Electrolyte membranes currently commercialized are Nation (made by Du Pont Company), Flemion (made by Asahi Glass Co. Ltd.), Aciplex (made by Asahi Kasei Corporation) and the like, which are all modified fluorocarbon resin membranes for the above reason.

These fluorocarbon resins are chemically inactive, and are not completely thermally fusion-bonded to general purpose thermoplastic resin films. Further, there are no appropriate binders for realizing bonding of these resins. Therefore, it has been very difficult to easily realize gas sealing of fuel cells using these materials.

For the purpose of increasing the gas sealing property, it has also been proposed to attempt to coat a sealing material on an outer wall of stacked cells made by stacking necessary number of unit cells and by tightening them all. However, it has been a difficult task to take certain unit cells out of this kind of outer seal type stack, when unit cells having lowered in their output during operation need to be replaced.

### Disclosure of Invention

It is an object of the present invention to provide a polymer electrolyte type fuel cell realizing a sufficient gas sealing property and easy maintenance by improving electrolyte membrane-electrode assemblies.

The polymer electrolyte type fuel cell according to the present invention comprises: an electrolyte membrane-electrode assembly comprising a hydrogen ion conductive polymer electrolyte membrane and a pair of porous electrodes sandwiching the polymer electrolyte membrane; a separator plate having a gas flow channel for supplying a fuel gas to one of the porous electrodes; and a separator plate having a gas flow channel for supplying an oxidant gas to the other one of the electrodes, wherein the electrolyte membrane-electrode assembly comprises a gas sealing member comprising: a portion thereof covering a part of the polymer electrolyte membrane, the part extending out of peripheral edge portions of the porous electrodes; and a portion thereof intruded into the inside of the peripheral edge portions of the porous electrodes.

The gas sealing member, which is in contact with the polymer electrolyte membrane, is preferably chemically bonded to the polymer electrolyte membrane at a contact portion therebetween.

The gas sealing member preferably has integrated therewith a gasket member having through-holes for passing the fuel gas and the oxidant gas.

The present invention provides a method of making a polymer electrolyte fuel cell, comprising a step of injection-molding or press-molding a thermoplastic resin at a peripheral edge portion of an electrolyte membrane-electrode assembly comprising a hydrogen ion conductive polymer electrolyte membrane and a pair of porous electrodes sandwiching the polymer electrolyte membrane, thereby to pressure-impregnate the resin into inside of peripheral edges of the porous electrodes, and to form a gas sealing member covering the polymer electrolyte membrane extending out of edge portions of the porous electrodes.

In a polymer electrolyte fuel cell stack made by:
stacking unit cells, according to the present invention, each composed of an electrolyte membrane-electrode assembly and a pair of electrically conductive separator plates; and
tightening them by using a tightening jig, it is easy to individually take out and replace electrolyte membrane-electrode assemblies or separator plates by loosening the tightening jig.

### Brief Description of Drawings

Fig. 1 is a schematic vertical cross-sectional view showing a conventional fuel cell.
Fig. 2 is a vertical cross-sectional view showing an apparatus for making an MEA, used in an example of the present invention, having a gas sealing member of a fuel cell.
Fig. 3 is a cross-sectional view of a main part of the MEA having the gas sealing member and made by using the apparatus.
Fig. 4 is a front view of the MEA, in which a gasket is bonded to the gas sealing member.
Fig. 5 is a front view of a separator plate used in an example of the present invention.
Fig. 6 is a front view of a carbon plate of the separator plate.
Fig. 7 is a front view of an insulating sheet of the separator plate.
Fig. 8 is a vertical cross-sectional view showing an apparatus for making an MEA, used in another example of the present invention, having a gas sealing member of the fuel cell.
Fig. 9 is a graph showing initial characteristics of the fuel cell according to an example of the present invention.
Fig. 10 is a graph showing the characteristics of the fuel cell after along period operation.
Fig. 11 is a graph showing variation, with time, of the output characteristics of another example of the present invention.

### Best Mode for Carrying Out the Invention

An electrolyte membrane-electrode assembly according to the present invention can be made as follows.

First of all, a hydrogen ion conductive polymer electrolyte membrane having a size larger than a catalyst-containing porous electrode is prepared. Porous electrodes are bonded to the opposite faces of the membrane, and a sealing resin for gas sealing is pressure-impregnated into micro pores of the porous electrodes at end portions of the electrodes. Simultaneously, the sealing resin is so integrally molded as to cover the hydrogen ion conductive polymer electrolyte membrane extending out of the periphery of the porous electrodes.

Thermoplastic resins are used for the sealing resin such as polyolefine resin, polystyrene resin, polyvinyl chloride resin, polyvinylidene chloride resin, polyvinyl alcohol resin, polyacrylic resin, polyacrylamide resin, polydiene resin, polyamide resin, polyester resin, polycarbonate resin, polyacetal resin, polyurethane resin, silicone resin and fluorocarbon resin. By injection-molding or press-molding these resins, while heating the same, a gas sealing member partially intruded into the micro pores of the electrodes can be formed at peripheral edge portions of the electrodes.

Thereby, such an electrolyte membrane-electrode assembly is realized that the assembly is isolated from outside, with short circuiting between mutual electrodes being prevented, and can be handled. This process enables stable sealing treatment, because a sealing portion having a desired size and a pressure-impregnation portion having a desired depth can be easily obtained by designing an appropriate mold and optimizing molding conditions such as sealing resins, temperature and pressure. Since this method is a non-solvent process, i.e. pressure-impregnation using thermoplasticization, the volume shrinkage after sealing treatment is little, so that a high pressure withstanding sealing is possible. Further, resins which preliminarily are sufficiently polymerized can be used, so that such resins are more chemically stable than thermosetting resins, and are not corroded by, even after a long period contact with, a polymer electrolyte membrane, which is hydrated and usually shows strong acidity. Thus, a highly reliable sealing is possible.

As a different method, a liquid-state polyolefine with its terminals being substituted with an acryloyl group, can be used as a gas sealing material. After the polyolefine is pressure-impregnated into micro pores of peripheral edge portions of the porous electrodes, it can be hardened by active radiation rays such as an electron beam. In this case, if a fluorocarbon material having its side chain terminals partially substituted with an acryloyl group is used, the sealing material of the gas sealing member and the hydrogen ion conductive polymer electrolyte membrane can have a strong chemical bonding therebetween by polymerization reaction therebetween.

Furthermore, by using an ethylene-propylene copolymer as the polyolefine and by adjusting the copolymerization ratio or degree of polymerization, it can be made to have a rubber elasticity, and the gas sealing member per se can be allowed to have a function of gasket or packing. By employing such structure, integral linkage from the electrolyte membrane-electrode assembly to the gasket becomes possible by the gas sealing material. Thus, in comparison with conventional packing sealing processes using e.g. O rings, resultant gas sealing can be very much improved in its reliability and reduction of process steps.

Another feature of this process is in that a complicated three-dimensional structure at the gas sealing member can be easily made by injection-molding or press-molding. That is, mechanical components such as through-holes for gas communication, gas flow channels, bolt tight-fastening holes, positioning holes and packing ribs can be seamlessly and integrally molded by appropriately designing molds without increasing the number of process steps. Thereby, the gas sealing member can be made to have the function, which conventionally the separator plates have been designed to bear, so as to make it possible to reduce the load of process of making the separator plates, and to easily increase the withstand pressure by forming its engagement structure with the separator plates.

A greatest advantage of the present invention is in that a polymer electrolyte fuel cell stack can be given such a structure that electrolyte membrane-electrode assemblies or separator plates can individually be taken out and exchanged by loosening a tightening jig. That is, a gas sealing portion extending from the electrolyte membrane-electrode assembly is made in a sheet form having the same area as that of the separator plate. Then, in the area of this sheet, through-holes for gas introduction and exhaustion and for tight-fastening bolts are formed. Then, a desired number of unit cells each made by sandwiching the above by the separator plates are stacked by using tight-fastening bolts. Desired unit cells can be taken out of the thus made cell stack by loosening the tightening jig. Usually, a fuel cell stack is made by stacking some tens of unit cells, but variations among unit cells in their performances occur after a long period operation. The above structure makes it possible for a maintenance work to measure voltages of individual unit cells, and to easily exchange unit cells having particularly lowered in their performances.

Hereinafter, a preferred embodiment of the present invention will be described with reference to figures.

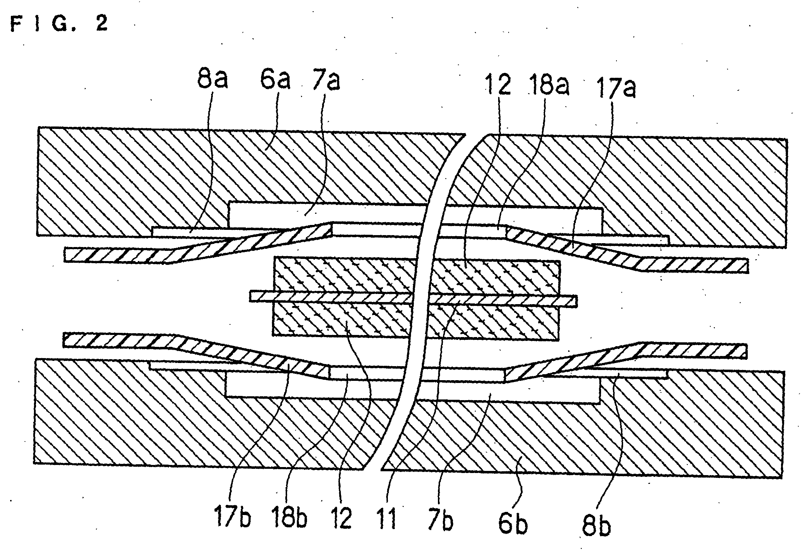

Fig. 2 shows an apparatus for forming a gas sealing member at peripheral edge portions of electrodes by press-molding.

An electrolyte membrane-electrode assembly (MEA) comprising a hydrogen conductive polymer electrolyte membrane 11 and a pair of porous electrodes 12 bonded to the opposite faces of the membrane is sandwiched, at opposite faces thereof, by a pair of thermoplastic resin films 17a and 17b, and is set between a pair of upper and lower molds 6a and 6b. The molds 6a and 6b respectively have, at centers thereof, concave portions 7a and 7b one size larger than the MEA, and also respectively have, at their peripheries, shallow concave portions 8a and 8b. The sum of the depth of the concave portion 7a and the depth of the concave portion 7b is equal to the thickness of the MEA. The resin films 17a and 17b respectively have, at centers thereof, holes one size smaller than the MEA. That is, the films 17a and 17b overlap, at respective inner edge portions thereof, a peripheral edge portion of the MEA, and have a size to extend, at outer edge portions thereof, beyond the mold. Fig. 2 shows a schematic structure, and thus is not necessarily accurate as to the relative sizes of respective elements. Particularly, the shown film portions and the mold portions corresponding thereto are drawn in a pretty compressed way as to their widths.

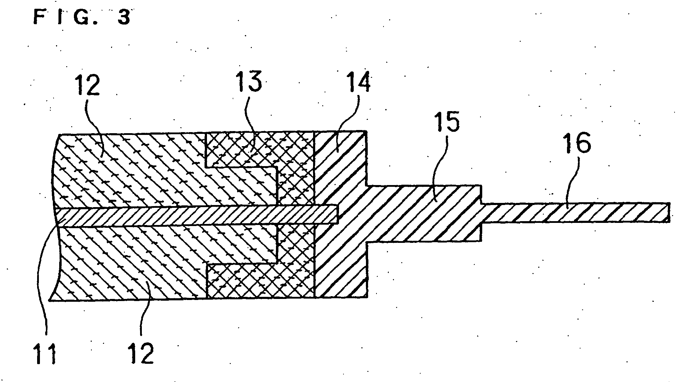

As shown therein, an MEA having a gas sealing member integrally molded at the peripheral edge portions of the MEA can be made by setting two resin films between the molds 6a and 6b, and vertically pressing both molds to each other, using hot pressing. Fig. 3 shows a main part of the thus obtained MEA. A gas sealing member 14 made of molded resin is integrally bonded to a peripheral edge portion of the MEA. This gas sealing member 14 is connected to the resin pressure-impregnated into micro pores of peripheral edge portions of electrodes 12. Reference numeral 13 indicates the portions of the electrodes having the resin intruded therein. In this example, the gas sealing member 14 has, at its outer periphery, a thin portion 15 and a residual portion 16 coupled to the thin portion. The residual portion 16 is a portion having been sandwiched by peripheral edge portions of the molds. These portions 15 and 16 can be used upon coupling a gasket to the gas sealing member 14.

The width of the gas sealing member can be optionally changed by e.g. the initial thickness of the used resin film, bonding temperature and shape of the mold.

As to the resin film, by using a laminate film having a low melting point resin at a portion thereof to contact the MEA, and a high melting point resin at a portion thereof to contact the mold, good die releasing after the pressing step can be realized, and a continuous production line can be installed.

Further, a part of the sealing resin can be substituted with a thermoplastic elastomer. For example, polypropylene is used for the resin film, and thereon is stacked a gasket made of polyolefine elastomer having, as its base, preliminarily injection-molded polypropylene. This stack is placed in a mold for sealing, and is hot-pressed. Thereby, a gas sealing member having a concave portion or a convex portion for engagement is molded. Thereupon, the polypropylene, which is a hard segment element of the elastomer, is fusion-bonded to the polypropylene of the film material, and thus the body from the MEA to the gasket becomes a functionally seamless seal. By providing a convex portion or a concave portion on the separator plate in a manner to match up with the gas sealing member, the separator plate and the MEA get to constitute a sealing structure.

Namely, the sealing member seamlessly extending from the MEA can form a very firm sealing structure with the separator plates by being subjected to elastic deformation owing to the tightening by the separator plates to cause engagement between the sealing member and the concave/convex portions of the separator plates. Film resin materials and elastomer materials to be used here are not to be limited to those described above. For example, polyester elastomer can be used for a polyethylene terephthalate film. As such, elastomers corresponding to respective resin films can be used. Furthermore, regarding the engagement structure between the separator plate and the elastomer, it is not to be limited to the one made by the concave/convex portions. Another manner such as providing a groove at the separator plate is also operable, needless to mention. Still further, it is also possible, as a matter of course, to constitute, by a single elastomer resin, the body from the gas sealing member to the gasket, using means of e.g. injection molding.

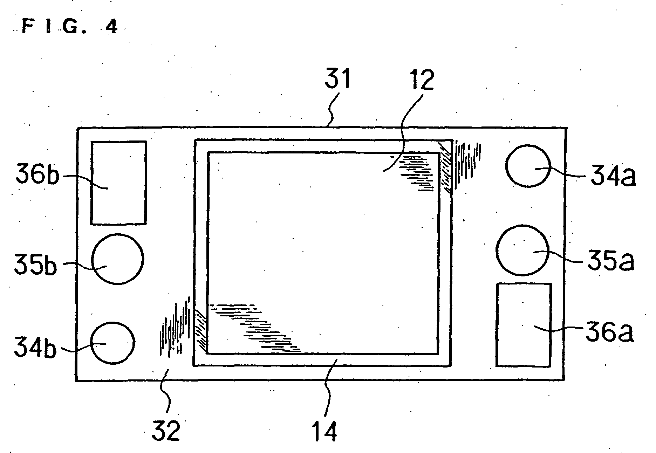

Fig. 4 illustrates an MEA having a sheet form gasket 32 integrally coupled to the portion 15 of the gas sealing member 14 of the MEA shown in Fig. 3. The gasket 32 has through-holes 34a, 35a and 36a for supplying an oxidant gas, a fuel gas and a cooling water, and through-holes 34b, 35b and 36b for exhausting them. In the case that an MEA has such structure, a cell stack can be easily assembled by stacking. unit cells each comprising such sheet sandwiched by separator plates. Furthermore, in case certain unit cells in the stack get deteriorated, they can be easily exchanged with new unit cells by loosening a tightening jig.

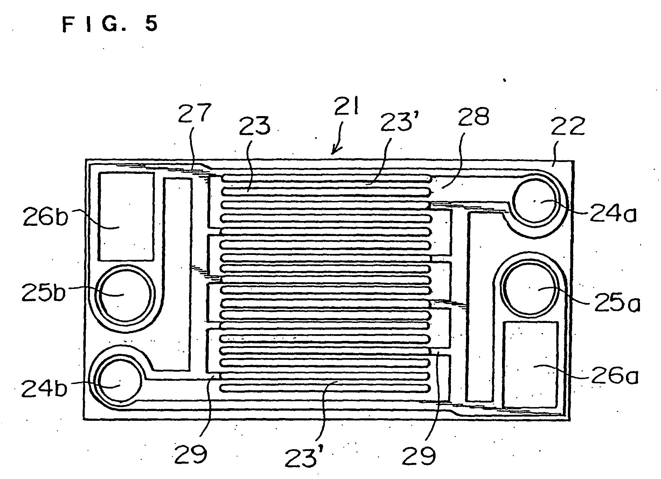

Fig. 5 illustrates an example of a separator plate to be combined with the above MEA.

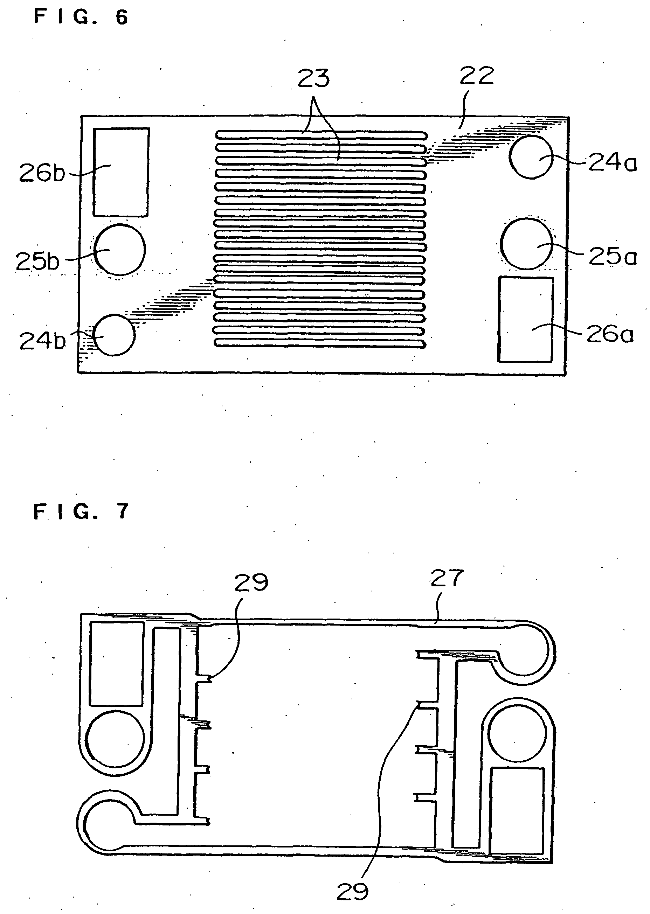

This separator plate 21 is structured by sticking a carbon plate 22 shown in Fig. 6 on an insulating sheet 27 shown in Fig. 7. The carbon plate 22 has an arrangement of plural projecting ribs 23 at a central part of one of the main surfaces thereof facing a fuel electrode, and also has, at a left part and a right part thereof, through-holes 24a, 25a and 26a for introducing a fuel gas, an oxidant gas and a cooling water, and through-holes 24b, 25b and 26b for exhausting them. On the other hand, the insulating sheet 27 is the one made by blanking a sheet. By sticking the sheet on the face of the carbon plate 22 having the ribs 23, a groove 28 for introducing the fuel gas from the gas introduction through-hole 24a to the gas exhaustion through-hole 24b is formed. Further, by intimately sticking the insulating sheet on the fuel electrode, the insulating sheet functions as a gasket for preventing the fuel gas from leaking to outside from the groove 28, and also for preventing, from leaking to outside, the oxidant gas and the cooling water which pass through the through-holes 25a, 25b and 26a, 26b.

In the groove 28 formed on the surface of the separator 21, two grooves 23' formed at both sides of the ribs 23 by the combination of the ribs 23 of the carbon plate 22 and rib segments 29 of the sheet 27 are to allow the fuel gas to pass therethrough.

In the following, another example of an apparatus for forming a gas sealing member at a peripheral edge portion of the MEA will be described.

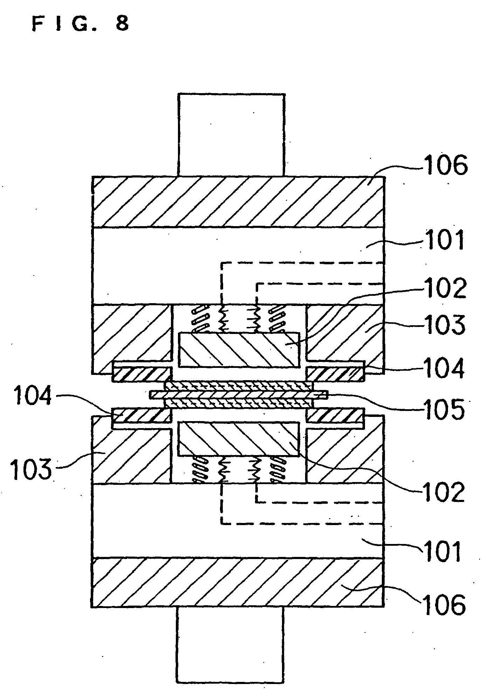

In the case that sealing treatment as described above is processed by a laminate film, the fusion-bonding temperature of the film may occasionally exceed the withstand temperature of the polymer electrolyte membrane. Fig. 8 shows an example of a process suitable for such case.

An MEA 105 comprising an electrolyte membrane and a pair of electrodes is sandwiched by two films 104, and is set within a press. Water jackets 102 are provided in correspondence with the MEA's portion to become an effective power generation area. The water jackets 102 are suspended by insulators 101 using springs, and are cooled by a cooling water supplied from the insulators 101. Heater blocks 103 for molding a resin and for pressure-impregnating the resin into peripheral edge portions of the electrodes are placed outside the water jackets 102. Presses 106 are provided on a top side and a bottom side of the insulators 101.

According to such apparatus, the MEA, which is in contact with the water jackets, is protected from high fusion-bonding heat, even in the case when resin materials having fusion-bonding temperatures above 200 °C such as polyethylene terephthalate, polycarbonate and acrylonitrile butadiene styrene are used.

### Example 1

An acetylene black carbon powder was allowed to carry platinum particles, having an average particle size of about 30 Å in a weight ratio of 75:25. This catalyst powder was dispersed in isopropanol. With this dispersion was mixed an ethyl alcohol dispersion of a perfluorocarbon sulfonic acid powder represented by the following formula (1), to prepare a 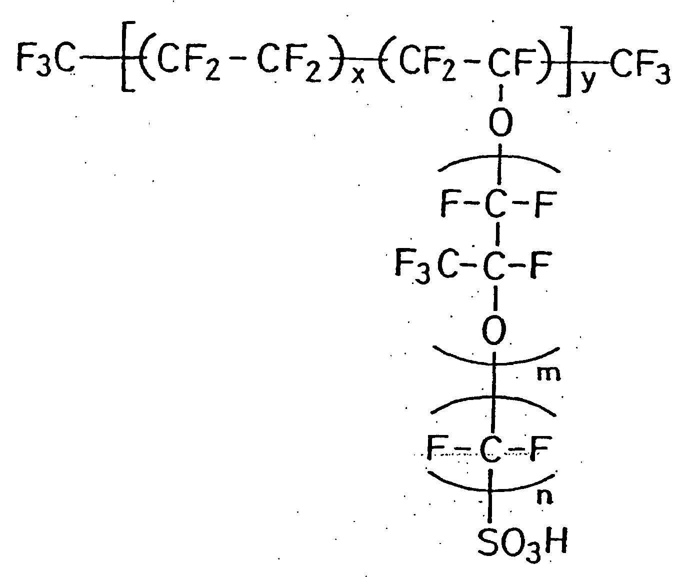 (wherein m = 1, n = 2, x = 5 to 13.5, and y ≒ 1000.) paste. This paste, as a raw material, was printed by screen printing on one side of a carbon fiber nonwoven fabric having a size of 15 cm × 15 cm and a thickness of 250 µm to form a catalyst layer, thereby to obtain a porous electrode. An adjustment was made for the obtained electrode to contain 0.5 mg/cm² platinum and 1.2 mg/cm² perfluorocarbon sulfonic acid.

A pair of electrodes each having been made as above were bonded by hot-pressing to a hydrogen ion conductive electrolyte membrane so that the respective catalyst layers get in contact with the opposite faces of a central part of the electrolyte membrane, wherein the electrolyte membrane has such a size that 1 mm width thereof extends out of the peripheral edges of the electrodes, whereby an electrolyte membrane-electrode assembly was made. The hydrogen ion conductive polymer electrolyte membrane as used herein is a 25 µm thick thin film comprising the perfluorocarbon sulfonic acid as represented by the above formula (1) (wherein in this case, m = 2, n = 2, x = 5 to 13, and y ≒ 1000).

As a next step, a gas sealing member comprising a sealing resin was formed at the peripheral edge portions of the MEA by hot-pressing at a temperature of 125 °C and 10 kg/cm² for 20 seconds by the apparatus shown in Fig. 2 and using a polyethylene film.

Subsequently, a sheet made of isobutylene resin was fixed on the gas sealing member of this MEA by thermal fusion-bonding, whereby an MEA with a gasket sheet was finished as shown in Fig. 4.

The MEA having the gasket sheet fixed thereon as made by the above process was sandwiched by separator plates as shown in Fig. 5, thereby to make a unit cell. The separator plate, as used here, was made by impregnating and curing a phenol resin in a carbon plate molded by cold-pressing a carbon powder material, so as to improve the gas sealing property. By bonding an insulating sheet to the separator plate, a gas flow channel was formed.

The separator used had a size of 18 cm × 25 cm and a thickness of 4 mm. The gas flow channel had a width of 2 mm and a depth of 1 mm. The insulating sheet was made of isobutylene resin and had a thickness of 1 mm.

The thus made MEA with the gasket sheet was sandwiched by a pair of separator plates and a separator plate having a cooling water flow channel, and the sandwich was tightened at both ends thereof by a unit area pressure of 10 kgf/cm², whereby Cell A according to this Example was assembled.

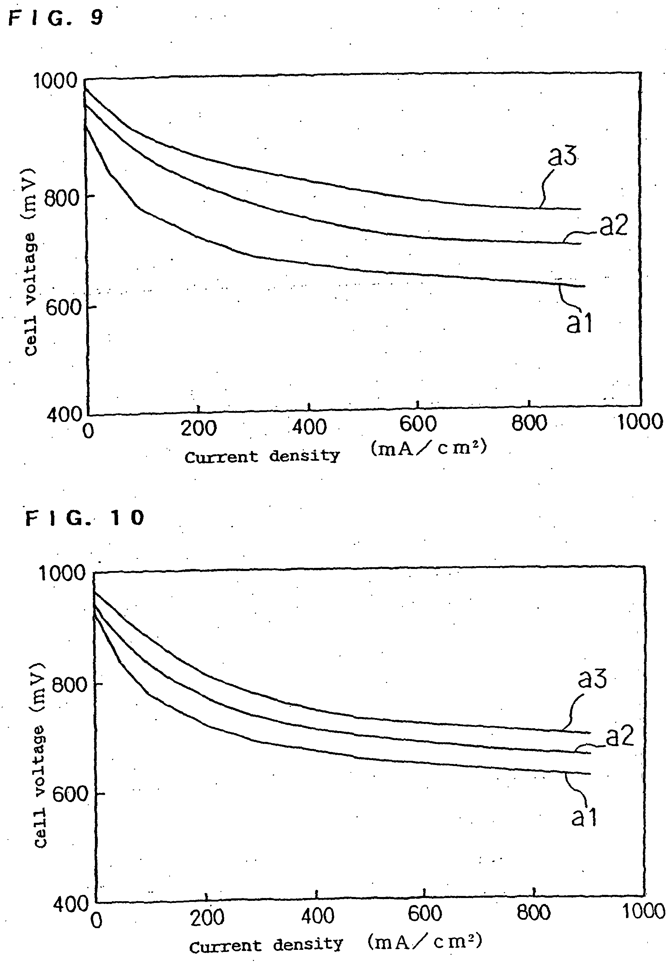

This cell was operated under the following conditions. That is, the cell temperature was maintained at 75 °C, a fuel gas (80 % hydrogen, 20 % carbon dioxide and 50 ppm carbon monoxide) was supplied to the fuel electrode through a bubbler of 85 °C. air was supplied to the air electrode through a bubbler of 65 to 70 °C, and the cell was operated at a fuel gas utilization rate of 70 % and an air utilization rate of 20 %. Fig. 9 shows its current-voltage characteristics.

In Fig. 9, curve a1 indicates the characteristics where the supply pressure of the fuel gas and the air was 1 kg/cm², whereas a2 and a3 indicate the characteristics where the supply pressures of the fuel gas and the air were 3 kg/cm² and 5 kg/cm², respectively. Further, Fig. 10 shows the characteristics of the cell after the operation of 1000 hours under those conditions. As indicated by the results of Fig. 9 and Fig. 10, it was proven that Cell A according to this Example did not experience gas leakage even after a long period pressurized operation.

### Example 2

This Example shows such one that, in an MEA with a gas sealing member, the gas sealing member and the hydrogen ion conductive polymer electrolyte membrane are chemically bonded with each other at a contact portion therebetween.

Up to the step of production of an MEA, the same materials and structures as those used in Example 1 were used. However, the material represented by the formula (2) was used for the hydrogen ion conductive electrolyte membrane. 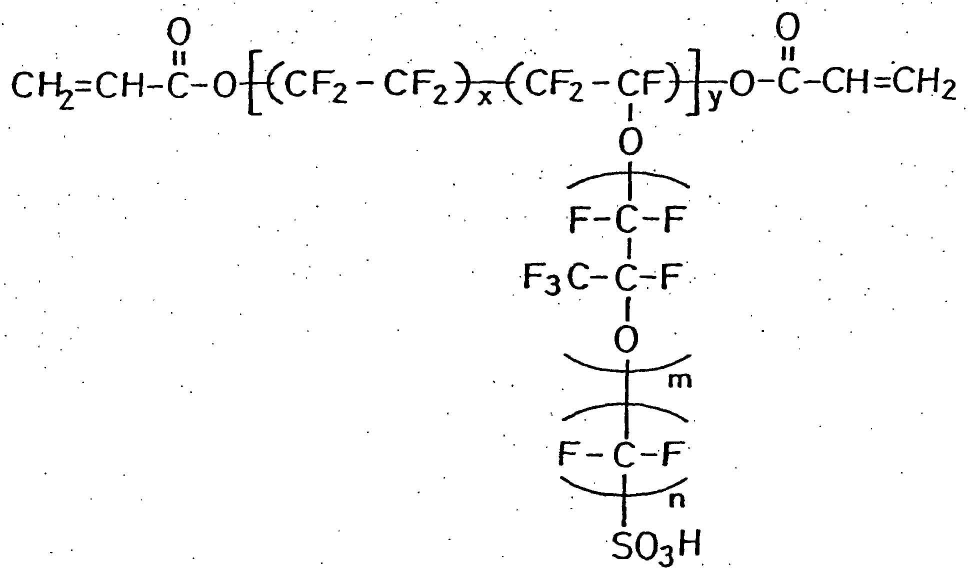 (wherein m = 2, n = 2, x = 5 to 13.5, and y ≒ 1000.)

The material represented by the formula (2) is the one made by substituting acryl groups for terminal groups of the hydrogen conductive polymer electrolyte represented by the formula (1). By using this MEA, an MEA with a gas sealing member was made. The gas sealing agent used in this Example is the one made by substituting acryl groups for terminal groups of ethylene-propylene copolymer, wherein the copolymerization ratio of ethylene and propylene is 2:3, and the degree of polymerization is about 500, showing viscous liquid state at room temperature.

A sheet, to be used for agasket, having a square-shaped blanking portion at a center thereof and being made of polyisobutylene was processed to have an MEA inserted inside thereof without allowing clearance therebetween, and the formulated concentrate of the above gas sealing agent was coated on the boundary therebetween, and then the coating was cured by electron beam irradiation. The sheet made of polyisobutylene used here is the one made by incompletely curing, by lower electron beam irradiation, isobutylene oligomer having its termincal groups substituted with an acryl group. Accordingly, the gas sealing member and the sheet made of polyisobutylene were integrally cured upon curing the above gas sealing agent in a manner that the acryl group in the formulated concentrate of the gas sealing agent caused copolymerization therebetween.

The thus made MEA with a gasket sheet was given through-holes for gas communication, and was subjected to a subsequent process similar to that of Example 1 by using separator plates, cooling plates and a jig, whereby Cell B according to this Example was made.

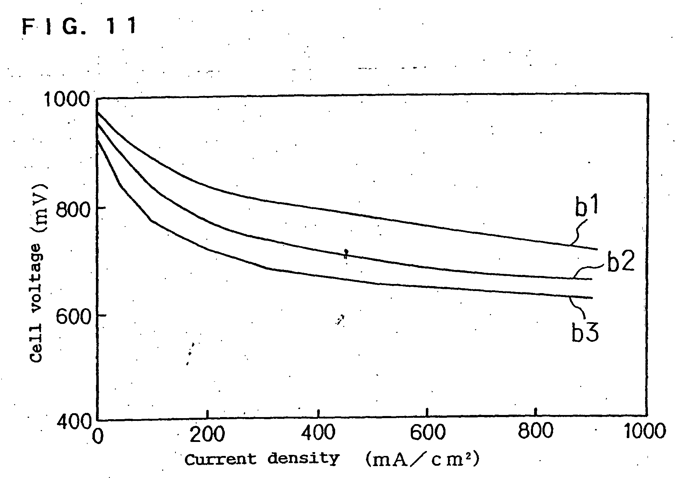

Cell B was operated under the same conditions as in those of Example 1, and evaluated with respect to its current-voltage characteristics. Fig. 11 shows its results. Curve b1 indicates the characteristics at a time point of 10 hours, while b2 and b3 respectively indicate the characteristics at 1000 hours and 2000 hours, after the operation started. It was proven by this result that Cell B according to this Example did not experience gas leakage after a long period pressurized operation.

In a cell stack prepared by assembling a necessary number of unit cells, each being made by sandwiching, by a pair of separator plates, a gasket-added MEA according to this Example, only such unit cells as having deteriorated in the performance after a long period operation can be exchanged by merely loosening the tightening jig. Thereupon, it is needless to mention that the MEAs and separator plates can individually be exchanged as a matter of course.

### Industrial Applicability

As evident from the foregoing, problems regarding gas sealing in a polymer electrolyte fuel cell can be conveniently and inexpensively solved according to the present invention, so that quality improvement and cost reduction can be realized.

## Claims

1. A polymer electrolyte fuel cell comprising: an electrolyte membrane-electrode assembly comprising a hydrogen ion conductive polymer electrolyte membrane and a pair of porous electrodes sandwiching said polymer electrolyte membrane; a separator plate having a gas flow channel for supplying a fuel gas to one of said porous electrodes; and a separator plate having a gas flow channel for supplying an oxidant gas to the other one of said electrodes, **characterized in that** said electrolyte membrane-electrode assembly comprises a gas sealing member comprising: a portion covering a part of said polymer electrolyte membrane, said part extending out of edge portions of said porous electrodes; and a portion intruded into inside of said edge portions of said porous electrodes.

2. A polymer electrolyte fuel cell according to claim 1, wherein said gas sealing member and said polymer electrolyte membrane are chemically bonded at a contact portion therebetween.

3. A polymer electrolyte fuel cell according to claim 1 or 2, wherein said gas sealing member has, integrally coupled therewith, a gasket member having respective through-holes for passing an fuel gas and an oxidant gas therethrough.

4. A method of making a polymer electrolyte fuel cell, comprising a step of injection-molding or press-molding a thermoplastic resin at a peripheral edge portion of an electrolyte membrane-electrode assembly comprising a hydrogen ion conductive polymer electrolyte membrane and a pair of porous electrodes sandwiching said polymer electrolyte membrane, thereby to pressure-impregnate said resin into inside of peripheral edge portions of said porous electrodes. and to form a gas sealing member covering said polymer electrolyte membrane extending out of edge portions of said porous electrodes.
